# EUROPEAN PATENT APPLICATION

(11) **EP 2 849 057 A1**
(43) Date of publication of application: **18.03.2015**
(21) Application number: 13184043.1
(22) Date of filing: 12.09.2013
(51) Int. Cl.: G06F 9/00, H04N 5/262

(54) **Video processing system**

(71) Applicant: LYNX Technik AG, 64331 Weiterstadt (DE)
(72) Inventor: Urvoy, Carole, 64289 Darmstadt (DE); Dose, Frances, 64295 Darmstadt (DE); Schmidt, H. Henning, 64347 Griesheim (DE); Merchant, James F., 65185 Wiesbaden (DE)
(74) Representative: Weilnau, Carsten

(57) **Abstract**

The present invention relates to a video processing system, to a method of configuring a video processing system and to a respective computer program, the video processing system comprises:
- a processing device (20) having at least a first processing unit (22) and a second processing unit (24) that are interconnected via at least one configurable connecting unit (26),
- a control module (30) coupled to the processing device (20) to configure the connecting unit (26),
- an input module (50) connected to the control module (30) to process a user input,
- a graphical user interface (40) to visualize the processing units (22, 24) and the configuration of the connecting unit (26), characterized in that
- the connecting unit (26) is represented on the graphical user interface (40) by at least one connecting line (26.1, 26.2, 26.3) having a first terminal (26.1a, 26.2a, 26.3a) connected to a port (22.1, 22.2, 22.3) of the first processing unit (22) and having a second terminal (26.1b, 26.2b, 26.3b) being arbitrarily connectable with a port (24.1, 24.2, 24.3) of the second processing unit (24).

## Description

### Field of the invention

The present invention relates to the field of signal processing, in particular to the field of video signal processing. The invention relates to a video processing system, and method of controlling a video processing system as well as to a respective computer program.

### Background

Video signal processing systems as they are used by stationary and mobile broadcasting stations, typically in the field of television broadcasting, have a rather complex internal structure, wherein a multitude of various processing units are interconnected and configured. Depending on the number of video channels and audio channels conversion, embedding, de-embedding, synchronization and/or multiplexing of respective video and/or audio signals requires a rather complex architecture of various processing units that may provide up/down conversion, cross-conversion, noise reduction, detail enhancement, color correction, general audio processing as well as various types of embedding and de-embedding and further signal processing steps.

Especially with digital video processing systems the various processing units may be electronically configured and controlled. Due to the vast amount of processing units, signal lines interconnecting the processing units as well as the multitude of configuration options, a remote or electronically based controlling and configuring of such video processing systems is rather elaborate, cumbersome and therefore rather time- and cost-intensive.

Moreover, if a video processing system has various processing units, their configuration might be somewhat confusing and their visual representation may even lead to misconfigurations.

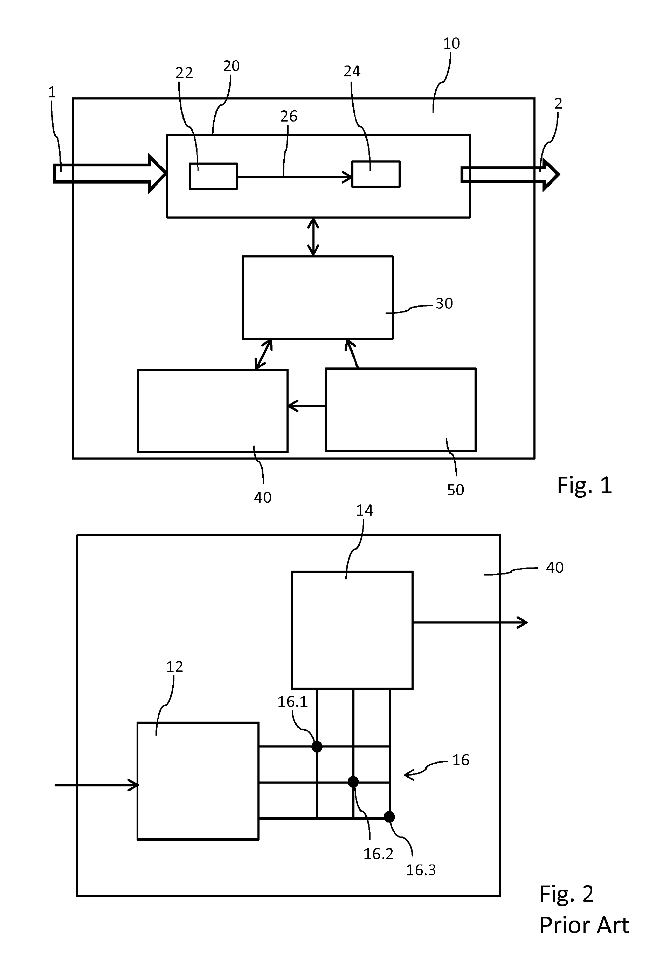

When one or several processing units of a video signal processing system comprise several input or output ports, the respective ports are typically connected via a connecting unit, such like a crossbar that allows for a remote and electronic configuration and reconfiguration, i.e. connection or reconnection of selected input and output ports. Typically, such connecting units, also denoted as crossbars are represented on a graphical user interface by way of a matrix as illustrated in Fig. 2. As shown there, each and every input or output port of a processing unit 12, 14 is represented by a straight line in such a way, that each output port of a processing unit 12 crosses or intersects each input port of another processing unit 14.

As illustrated in the example of Fig. 2, whereby first and second processing units 12, 14 each comprise three output ports and three input ports the matrix representation of the connecting unit 16 provides altogether nine potential interconnection points. As illustrated in Fig. 2, there are only three active connecting points 16.1, 16.2, 16.3 that represent a signal processing interconnection of respective output and input ports.

Such a visual representation of a connecting unit 16 is rather space wasting on a graphical user interface. Moreover, the graphical representation of the actual configuration of a connecting unit 16 is somewhat ambiguous and requires a respective training for the operator of such video signal processing systems. The permanent illustration of all input and output ports of all processing units, even when not in use, might be somewhat confusing and may eventually even lead to unintentional misconfigurations.

It is therefore an object of the present invention to provide a video processing system, and method of configuring a video processing system, in particular of at least one connecting unit thereof, as well as a respective computer program that provide a rather intuitive, fast, easy and less error prone configuration and handling of a video signal processing systems.

### Summary of the invention

In this regard the present invention relates to a video processing system that comprises a processing device having at least a first processing unit and a second processing unit. First and second processing units are interconnected via at least one configurable connecting unit. In other words, input and output ports of first and second processing units are connected with the configurable connecting unit in order to enable an electronic configuration and reconfiguration of the connection of input and output ports of first and second processing units.

Additionally, the video processing system comprises a control module coupled to the processing device in order to configure at least the connecting unit. In this way, the control module is adapted to electronically modify and to electronically configure the connecting unit.

The processing device also comprises a graphical user interface to provide a visual representation of the processing device with its at least two processing units and the connecting unit coupled therewith.

The processing system also comprises a graphical user interface to provide a visual representation of the processing device with its at least two processing units and the configurable connecting unit. Here, the connecting unit is typically illustrated on the graphical user interface in order to unambiguously and to intuitively illustrate the mutual interconnection of input and output ports of first and second processing units, respectively.

Additionally, the video processing system also comprises an input module which is connected to the control module in order to process a user input. The input module may also be coupled with the graphical user interface or may even be represented by the graphical user interface. Moreover, the input module may even be at least partially integrated in the graphical user interface. Hence, the graphical user interface may comprise a touch screen, thereby combining a graphic display and an input module.

The connecting unit is represented on and by the graphical user interface by at least one connecting line having a first terminal connected to a port of the first processing unit and having a second, hence an opposite terminal being arbitrarily connectable with a port of the second processing unit. In a rather simple or basic representation, the connecting unit just consists of a single connecting line having first and second oppositely located terminals, wherein the first terminal is e.g. connected with an output port of the first processing unit and wherein the second terminal is connected with an input port of the second processing unit.

Due to the arbitrary connectivity of a terminal of a connecting line with varying ports of first or second processing units on the graphical user interface, a rather simple, intuitive and clear visual representation of the processing device and in particular of its connecting unit can be provided. Moreover, the visual representation of the connecting unit by means of connecting lines with oppositely located terminals allows to simplify the graphical representation of a connecting unit. In particular, only those ports of first and second processing units that are actually active and that are hence interconnected with another port are visually indicated and represented by and on the graphical user interface.

Any manipulation or configuration action executed by means of the graphical user interface is directly transferred to and/or physically embedded in the connecting unit of the processing device, by means of the input module, the processing module and/or by means of the graphical user interface.

According to a further embodiment, the connecting unit is configurable by disconnecting a first or a second terminal of a connecting line from a port of the first or of the second processing unit and by reconnecting the disconnected terminal to a different port of one of first and second processing units. The visual representation of disconnecting and reconnecting therefore mimics disconnecting and reconnecting of a cable or of wires with various ports. By adapting the graphical representation of the connecting unit to the connecting and disconnecting of cables or wires from and with variable ports of processing units, a very intuitive and clear approach for configuring a connecting unit is provided.

According to a further embodiment, at least one of first and second terminals of the connecting line of the connecting unit is disconnectable from a port of first or second processing units by selecting the terminal via the graphical user interface and by displacing the selected terminal away from the respective port. Selecting and displacing or dragging of the at least one terminal is at least supported by the graphical user interface. The action of selecting and displacing or dragging may be further conducted by means of the input module. For instance, selecting and displacing or moving of the terminal may be conducted and executed by means of a computer mouse or by means of some other kind of input-, control- or pointing device.

The action of selecting a terminal may comprise the steps of bringing a mouse pointer in the direct vicinity of a terminal or to overlapping configuration with the terminal and by subsequently executing a mouse click or a similar selection action. While holding down e.g. the mouse button and while keeping the terminal selected, the respective terminal may be displaced on the graphical user interface according to a subsequent movement of a mouse pointer until a target port, to which the terminal should be connected, has been reached. Releasing of a mouse button may then de-select the terminal, which in response to such a de-selection will be connected to the target port.

Accordingly and following another embodiment the at least one of first and second terminals is connectable with a port of first or second processing units by selecting the terminal via the graphical user interface and by displacing the selected terminal towards the port, hence to a target port, to which the terminal is to be connected. As already described, such a displacing action may be controlled via the input module, e.g. in form of a computer mouse or by means of a similar input- or control device. If for instance the graphical user interface and the input module are represented both by a single touch screen, selection and displacing of a terminal may be conducted by means of a fingertip followed by a movement of a finger across the touch screen.

Upon reaching a target port, to which a previously selected terminal should be connected, the terminal is to be deselected in order to enable establishment of a connection of said terminal with the respective target port. De-selection and/or connection of a selected terminal with a target port may be conducted in various different ways. In a simple approach, such de-selection or connection may be conducted by releasing a previously and constantly depressed mouse button. It is also conceivable to conduct a de-selection by means of a double click or by means of a particular additional input command, e.g. by making use of a different mouse button, a particular keyboard input or by means of a predefined gesture on a touch screen.

In this way, a rather simple and intuitive approach for disconnecting, reconnecting and reconfiguring of connecting lines interconnecting input and output ports of first and second processing units can be provided. Consequently, not only the way of implementing a dynamic and arbitrary configurable configuration but also the static and visual representation of the connecting unit is simplified and gains clarity.

According to another embodiment, a connecting line of the connecting unit is creatable by selecting of a port of at least one of first or second processing units and by displacing the selected port towards a port of the second or first processing unit. Here, a connecting line may be just created by dragging an imaginary line between e.g. an output port of the first processing unit to a particular input port of the second processing unit. Drawing or dragging of an imaginary line from an arbitrary output port to an arbitrary input port is interpreted by the input module and by the control module in such a way to establish a signal processing interconnection between the respective ports of first and second processing units.

In this way, non-active input or output ports of first and second processing units do not necessarily have to be provided with a connecting line or with a potential connecting line per default, as it is always the case in a matrix representation of a crossbar according to the prior art. Creating of a connecting line by simply selecting and dragging of a respective port of a processing unit therefore allows to reduce the visually displayed number of connecting lines of the connecting unit to the number of connecting lines that are actually active in the signal processing between first and second processing units.

According to another embodiment the graphical user interface is adapted to illustrate only those connecting lines that are actually interconnecting at least two ports of first and second processing units. Non-connected ports of first and/or processing units may be just equipped and connected with a connecting line on demand, i.e. when actually connected with a further port of the same or with another processing unit. In this way, deactivated connecting lines are effectively concealed and erased on the graphical user interface to improve clarity and lucidity of the graphical representation of the processing device.

In order to remove a connecting line between first and second processing units, at least one of its terminals is selectable and is to be displaced towards the oppositely located terminal. Mutual approaching of oppositely located terminals of a connecting line is thus interpreted by the graphical user interface and/or by the input module to abrogate a respective connection and to conceal and to remove the respective connecting line of the connecting unit. Typically, at least one of the graphical user interface, the input module and the control module is adapted to effectively remove a connecting line once the two terminals thereof approach a distance on the graphical user interface smaller than a predefined minimum distance.

Optionally and depending on the preferences and configurations of the processing device and/or of its control module it is even conceivable, that a connecting line is deactivated and disappears from the graphical user interface as soon as a terminal of a connecting line overlaps with a processing unit to which the oppositely located terminal is already attached to. This configuration is of particular use, wherein input and output ports of one and the same processing unit must not be interconnected by a connecting unit or connecting line.

According to another embodiment two or more connecting lines with their respective terminals may be interconnected with only one port, either with an input or with an output port of first or second processing units. In this case, the graphical user interface is adapted to represent the two or even more terminals of respective connecting lines as a merged terminal. The merged terminal may have a similar or almost equal representation compared to a conventional or single terminal of a connecting line. Depending on a zoom level of the graphical user interface, such a merged terminal may resolve in order to show the various terminals thereof and to enable individual selection of at least one terminal thereof, e.g. for a reconfiguration or the like.

Alternative to a zoom functionality it is also conceivable, that a variety of selectable terminals of a merged terminal is visually provided for selection, when the merged terminal has been selected in a preceding step.

In still another embodiment, the geometry, contour and shape of the connecting line of the connecting unit is dynamically adaptable to the position of the first and/or the second terminals thereof. In this way, the clarity and lucidity of the graphical representation of the connecting unit can be further improved. An operator or user of the video processing system directly receives a visual feedback even during a configuring or reconfiguring activity of the connecting unit.

In another aspect the invention also relates to a method of configuring a connecting unit of a video processing system as described above. Said method comprises at least the steps of selecting of a terminal of a connecting line of the connecting unit via the graphical user interface and displacing the selected terminal towards a port of at least one of the first and second processing units. In this way, at least one terminal of a connecting line of a connecting unit is arbitrarily connectable with a port of first or second processing units.

It is generally to be noted here, that the method of configuring a connecting unit of the video processing system is directly correlated to the video processing system as described above. Consequently, any features, effects and benefits as already mentioned in connection with the video processing system and with its connecting unit are equally valid and disclosed herein also for the method of configuring the connecting unit; and vice versa.

By means of individually and arbitrarily selecting terminals of connecting lines and by displacing and reconnecting a selected terminal to a different port of the first or second processing units, a rather intuitive, simple and clear configuration of a connecting unit can be provided.

In a further embodiment, a selected terminal of a connecting line of the connecting unit is connected to a port by deselecting the terminal in direct vicinity to the port. Such a deselecting operation may be conducted by e.g. a mouse click, a double click, clicking of a different mouse button, by entering a keyboard command, e.g. in connection with a respective control command of a computer mouse or by various other types of input commands, such like a predefined gesture on a touch screen.

Moreover and according to a further embodiment, the course or shape of a connecting line is dynamically adapted to the displacement of at least one terminal thereof on the graphical user interface, especially during a configuration or reconfiguration operation of the configurable connecting unit. In this way an improved look and feel of the configuration options and configuration behavior of the connecting unit can be provided on the graphical user interface. A user or operator of the video processing system therefore obtains a direct and almost simultaneous visual feedback when configuring the connecting unit.

According to another embodiment a connecting line is visually highlighted by the graphical user interface in response to a selection of one of its terminals. Alternatively or additionally it is also conceivable, that upon selection of a connecting line at least one, preferably both of its terminals is visually highlighted. For the purpose of highlighting a connecting line or at least one of its terminals it may be sufficient, when a pointing device, such like a mouse pointer simply overlaps with the graphical representation of the connecting line or one of its terminals. In the event, that the connecting line or several connecting lines of a connecting unit exhibit a rather complicated course or slope, the visual highlighting of selectable connecting lines may further improve clarity and lucidity of the visual and graphical representation of the connecting unit on the graphical user interface.

Furthermore and according to another embodiment, the graphical user interface provides a variety of selectable terminals in response to a selection of a merged terminal. As already described above, a merged terminal typically represents at least two terminals of different connecting lines that are connected with one and the same port of a processing unit. In this way and by selecting a merged terminal, the various terminals constituting the merged terminal may be resolved in order to select one terminal of the merged terminal for the purpose of reconfiguring the connecting unit.

In still another aspect the invention also relates to a computer program for configuring a connecting unit of a video processing system as already described above. The computer program is typically implementable in the control module and/or in the graphical user interface of the video processing system. The computer program comprises program means to select a terminal of a connecting line via the graphical user interface and further comprises program means for displacing the selected terminal towards a port of at least one of first and second processing units.

It is generally to be noted here, that the computer program is directly correlated to the video processing system and the method of controlling such a system as described above. Consequently, any features, effects and benefits as described above in connection with the video processing system and the method are equally valid and disclosed also for present computer program; and vice versa.

It is further to be mentioned in this context, that the division of the video processing system into a processing device, a control module, a graphical user interface and an input module may be changed arbitrarily, depending on the hardware and software implementation of the video processing system. Typically, the processing device with first and second processing units represents various hardware components that are electronically controlled by the control module. The control module may also comprise a piece of hardware but may be also realized by a processing unit of a computer. Moreover, the functions of the control module as well as the functions of some or even several processing units may also be purely implemented by software.

In general, the division and definition of various processing units of the processing device may be directly correlated to different hardware components that are physically interconnected by means of the at least one signal line. Alternatively, the various processing units and signal lines may represent logical devices implemented by a common hardware component.

Moreover and in general, the configuring operations to be executed by a user or operator by making use of the input module and the graphical user interface are implemented in the connecting unit by means of the control module, the graphical user interface and/or by means of the input module.

### Brief description of the drawings

In the following, various features, effects and beneficial aspects of an exemplary embodiment of the present invention will be illustrated by making reference to the drawings, in which:
- Fig. 1: schematically shows a block diagram of the video processing system,
- Fig. 2: shows a configuration of a connecting unit according to the prior art,
- Fig. 3: shows a first configuration of a connecting unit according to the present invention,
- Fig. 4: schematically shows another configuration of the connecting unit,
- Fig. 5: is indicative of a further configuration of the connecting unit,
- Fig. 6: shows another configuration of the connecting unit,
- Fig. 7: shows a graphical representation of another configuration of the connecting unit interconnecting three different processing units,
- Fig. 8: shows the configuration according to Fig. 6 with a highlighted connecting line,
- Fig. 9: is indicative of a further graphical representation of the connecting unit at an enlarged zoom level,
- Fig. 10: shows the graphical representation of a processing unit and a connecting unit according to Fig. 9 at a further increased zoom level,
- Fig. 11: schematically shows a flowchart of the method of configuring the video processing system, in particular a connecting unit thereof.

### Detailed description

The video processing system 10 according to Fig. 1 comprises a processing device 20 featuring various processing units 22, 24. An input stream 1 present at an input of the processing device 20 is processed in a predefined way and will be provided as an output stream 2 at the output of the processing device 20. The video processing system 10 further comprises a control module 30 that interacts with the processing device 20 to configure the processing device 20.

Typically, the control module 30 is operable to configure the various processing units 22, 24 as well as the connecting unit 26 by way of which signals from e.g. a first processing unit 22 are transferred to a second processing unit 24 and vice versa. The connecting unit 26 comprises not only just one but several connecting lines 26.1, 26.2, 26.3 that may be arbitrarily used to connect various input and output ports 22.1, 22.2, 22.3, 24.1, 24.2, 24.3 of first and second processing units 22, 24 in a reconfigurable way.

Additionally, the video processing system 10 also comprises a graphical user interface 40, which may be provided by a monitor, by a two-dimensional or even three-dimensional display. The graphical user interface 40 provides a visual representation of the processing device 20 with its various processing units 22, 24 as well as with the connecting unit 26. In this way, the graphical user interface 40 is particularly adapted to visualize the configuration as well as the detailed interconnection of the processing device's 20 processing units 22, 24.

Additionally, there is also provided an input module 50, which is connected to the control module 30 to process a user input. The input module 50 may even be directly connected to the graphical user interface 40. It is also conceivable, that the function of the input module 50 is completely provided by the graphical user interface 40, especially when the graphical user interface 40 is implemented as or comprises a touch screen. The present illustration of the video processing system 10 and of its visual representation by means of a graphical user interface 40 is only exemplary and does not particularly specify the concrete function of the processing units 22, 24 and their mutual interaction.

Generally, the processing units 22, 24, 26, 28 may be implemented as up/down/cross-converters providing various standard video output formats, such like 625 (4:3), 625 (16:9), 720p25, 720p50, 1080i50, 1080p25, 1080p50. Typically, when implemented as a respective converter, the respective processing unit may provide various conversion modes, such like Pillarbox 4:3, Letterbox 16:9, Center Cut, 14:9 Conversion, Stretch to Fill, or other configuration options, such like activated or deactivated motion adaptive conversion. The processing units 22, 24, 26, 28 may also provide noise reduction, detail enhancement, color correction or audio processing as it is widely known in the state of the art.

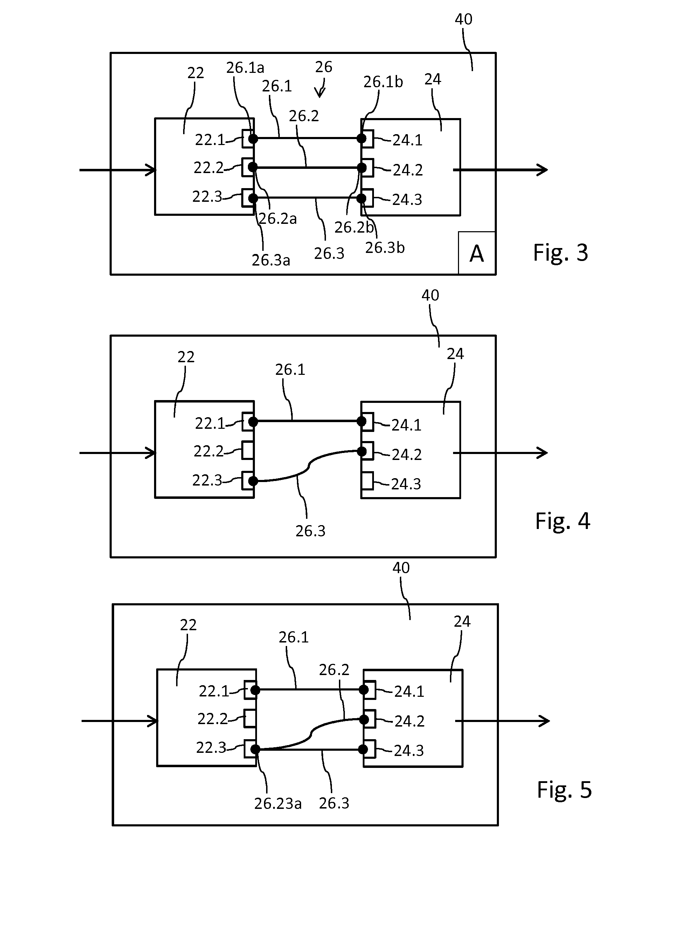

In the various configuration scenarios as shown in Figs. 3-9 there is only illustrated a first processing unit 22 and a second processing unit 24 interconnected via a reconfigurable connecting unit 26. Only for reasons of a rather simple description of the general working principle of the present invention, the first processing unit 22 comprises three output ports 22.1, 22.2, 22.3 that are interlinked and interconnected with respective input ports 24.1, 24.2, 24.3 of the second processing unit 24. The mutual interconnection of first and second processing units 22, 24 is provided by the reconfigurable connecting unit 26.

As illustrated in the configuration of Fig. 3, the connecting unit 26 comprises three connecting lines 26.1, 26.2, 26.3. Each one of the connecting lines 26.1, 26.2, 26.3 comprises a first terminal 26.1 a, 26.2a, 26.3a. Oppositely located, the respective connecting lines 26.1, 26.2, 26.3 comprise a second terminal 26.1 b, 26.2b, 26.3b. As shown in Fig. 3, the connecting line 26.1 interconnects output port 22.1 with input port 24.1 of the first and the second processing units 22, 24 respectively.

In a similar way the second connecting line 26.2 connects the output port 22.2 of the first processing unit 22 with the input port 24.2 of the second processing unit. Moreover, the third connecting line 26.3 of the connecting unit 26 connects the output port 22.3 of the first processing unit 22 with the input port 24.3 of the second processing unit 24.

The configuration of the connecting unit 26 as shown in Fig. 3 is effectively identical to the configuration of the connecting unit 16 as shown in Fig. 2. But the representation of Fig. 3 with various connecting lines, each of which having oppositely located terminals to be arbitrarily connected with different input or output ports 24.1, 24.2, 24.3, 22.1, 22.2, 22.3 is rather intuitive and self-explaining.

In a different configuration as shown in Fig. 4 the connecting unit 26 only comprises two separate connecting lines 26.1, 26.3. While in comparison with the configuration according to Fig. 3 the first connecting line 26.1 still interconnects output port 22.1 with input port 24.1 the further connecting line 26.3 now interconnects the output port 22.3 of the first processing unit 22 with the input port 24.2 of the second processing unit 24. Apparently, the overall shape and geometry of the connecting line 26.3 has changed.

Such a reconfiguration between Fig. 3 and 4 is simply attainable by selecting and moving the terminal 26.3b of the connecting line 26.3. When starting from the configuration according to Fig. 3, the terminal 26.3b may be selected and may be simply dropped or dragged towards or to the input port 24.2. Additionally and for deactivating the connecting line 26.2, at least one of its terminals 26.2a, 26.2b may be selected and moved to the opposite terminal. Additionally or alternatively, the entire connecting line 26.2 may be selected and deleted, e.g. by making use of a respective command to be processed by the input module 50 and the processing module 30.

In the further configuration as shown in Fig. 5, only the output port 22.2 of the first processing unit 22 remains disconnected while the output port 22.3 of the first processing unit 22 is connected to the input ports 24.2 and 24.3 of the second processing unit 24 via the connecting line 26.2 and via an additional connecting line 26.3. Here, the terminals 26.2a, 26.3a of the two connecting lines 26.2, 26.3 that are both connected with one and the same output port 22.3 of the first processing unit 22 form a merged terminal 26.23a. Compared to other terminals 26.1a as shown for instance in Fig. 3, the merged terminal 26.23a has an almost identical or similar graphical representation.

It may be only upon a selection of the merged terminal 26.23a, that the respective terminals 26.2a, 26.3a of the respective connecting lines 26.2, 26.3 are separately illustrated for the purpose of an individual selection thereof.

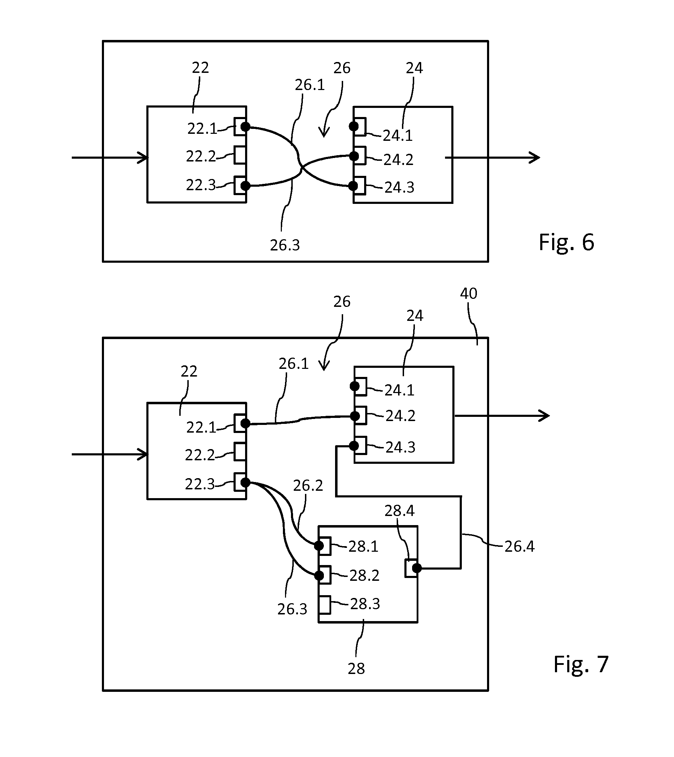

In the further configuration as illustrated in Fig. 6 the two connecting lines 26.1, 26.3 traverse each other without forming a signal transferring interconnection. Here, a first output port 22.1 is connected via connecting line 26.1 with a third input port 24.3 of the second processing unit 24 while a third output port 22.3 of the first processing unit 22 is connected via the connecting line 26.3 with a second input port 24.2 of the second processing unit 24.

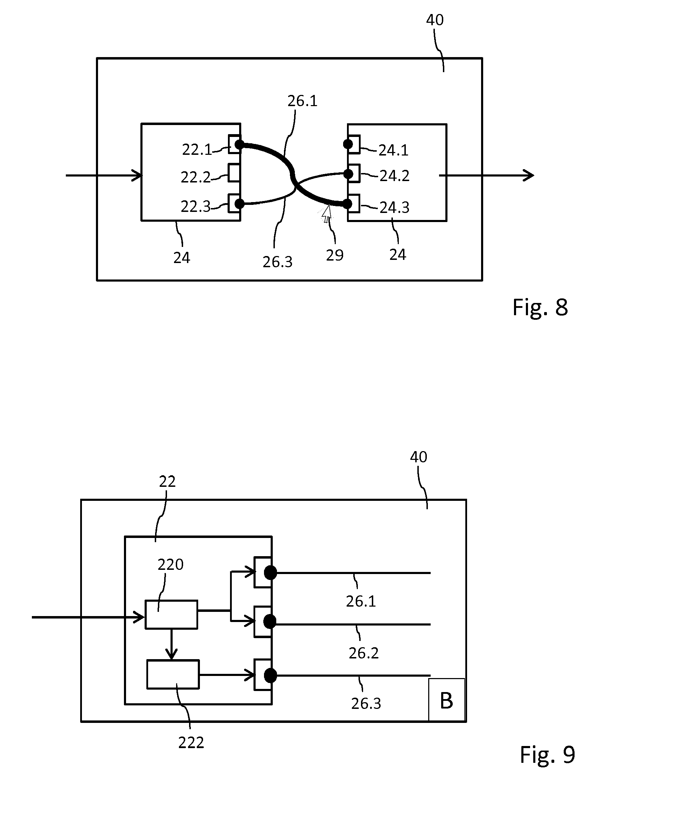

The arbitrary connectivity of individual connecting lines 26.1, 26.2, 26.3 provides a clear, lucid and intuitive approach to visualize the mutual connectivity of input and output ports 22.1, 22.2, 22.3, 24.1, 24.2, 24.3 of first and second processing units 22, 24. As further illustrated in Fig. 8 at least one of the connecting lines, presently the connecting line 26.1 may be highlighted in response to an at least temporal selection thereof, which may be triggered by moving a mouse pointer 29 into an overlapping configuration with the respective connecting line 26.1.

In response to such a hovering over the connecting line 26.1, the connecting line 26.1 may be visually highlighted, e.g. by means of a different color, by means of a varying thickness or by means of some other highlighting feature, such like an animated visual representation.

In the further visual representation of the processing device 20 on the graphical user interface 40 according to Fig. 7, there are illustrated three separate but mutually interconnected processing units 22, 24, 28 that are altogether interconnected by one and the same connecting unit 26. Here, the first output port 22.1 of the first processing unit 22 is connected with a second input port 24.2 of the second processing unit 24 via the connecting line 26.1. By means of two additional connecting lines 26.2, 26.3 the output port 22.3 of the first processing unit 22 is connected to first and second input ports 28.1, 28.2 of the third processing unit 28.

Additionally, the connecting unit 26 comprises a fourth connecting line 26.4 by way of which an output port 28.4 of the third processing unit 28 is connected with an input port 24.3 of the second processing unit 24. In this way, even a rather complicated mutual interconnection of more than two processing units 22, 24, 28 can be graphically represented and illustrated in a rather simple as well as reconfigurable way. Otherwise, when making use of a matrix representation as known in the prior art, interconnection of more than two processing units 22, 24, 28 would require illustration of at least two matrices or of an interconnecting 3-or larger-dimensional matrix, which is difficult to visualize on a two-dimensional screen.

Additionally, the graphical user interface 40 may be further adapted to scale the visual representation of the various processing units 22, 24, 28 and the connecting unit 26 in response to a user's zoom level input A, B, C. Depending on a selected zoom level input A, B, C, the graphical representation of the graphical user interface may selectively conceal or reveal various details of the processing units 22, 24, 28 and/or of the connecting unit 26. Generally, the visual representations of the processing device 20 according to Figs. 2-7 reflect a rather low zoom level A.

Fig. 9 now depicts an enlarged or scaled sectional view of the processing device 20 when the graphical user interface 40 has been switched to a larger zoom level B. As becomes apparent from Fig. 9, the graphical representation on the graphical user interface 40 then reveals at least two sub-processing units 220, 222 of the first processing unit 22. Moreover, also the signal paths to and from as well as between these sub-processing units 220, 222 are revealed.

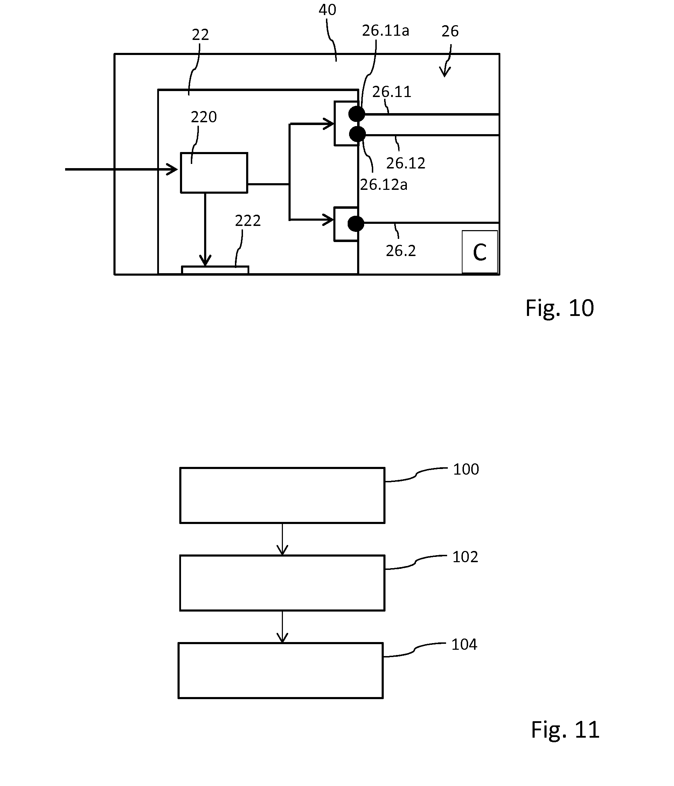

In Fig. 10, a further increased zoom level C is illustrated. As becomes apparent there, also the output port 22.1 is illustrated in an enlarged configuration. Moreover, the connecting line 26.1 splits up into two parallel connecting lines 26.11, 26.12. Each one of these sub-connecting lines 26.11, 26.12 comprises a terminal 26.11 a, 26.12a connected with the output port 22.1. For instance, the connecting line 26.1 may represent a stereo-type signal line, which splits up into left and right signal channels 26.11, 26.12.

In order to implement such a zoom functionality the various processing units 22, 24, 28 as well as the connecting lines 26.1, 26.2, 26.3 of the connecting unit 26 are assigned with a display identifier a, b, c in order to determine, in how far the respective component of the processing device 20 should show up or should be concealed when a particular zoom level input A, B, C is selected.

The flowchart according to Fig. 11 schematically illustrates the various process steps of the method of configuring the connecting unit 26 of the processing device 20. In a first step 100 a particular terminal, e.g. terminal 26.1a of a connecting line 26.1 is selected. In a preceding step 102, said terminal 26.1 a is moved or displaced towards a target port of the same or of another processing unit.

When reaching the target port, selection of the terminal 26.1 a may be deactivated in a subsequent step 104, thereby establishing a new connection of the terminal 26.1 a with a different input or output port of first or second processing units 22, 24. Alternatively, if the connecting line 26.1 is not yet present, which may be the case in an initial configuration procedure, in a first step 100, a particular port, e.g. output port 22.1 of a first processing unit 22 is selected.

In a subsequent step 102, said selected output port 22.1 is moved and displaced towards an input port 24.1 of e.g. a second processing unit 24. When reaching the target or input port 24.1, in a subsequent and final step 104 the dragged output port 22.1 transforms into the connecting line 61.1 with two terminals 26.1 a, 26.1 b, each of which being interconnected with an output port 22.1 and an input port 24.1 of first and second processing units 22, 24, respectively.

### Reference Numerals

- 1: input stream
- 2: output stream
- 4: signal processing path
- 6: signal processing path
- 10: video processing system
- 12: processing unit
- 14: processing unit
- 16: connecting unit
- 16.1: connecting point
- 16.2: connecting point
- 16.3: connecting point
- 20: processing device
- 22: processing unit
- 22.1: output port
- 22.2: output port
- 22.3: output port
- 24: processing unit
- 24.1: input port
- 24.2: input port
- 24.3: input port
- 26: connecting unit
- 26.1: connecting line
- 26.2: connecting line
- 26.3: connecting line
- 26.1 a,b: terminal
- 26.2a,b: terminal
- 26.3a,b: terminal
- 26.11: sub-connecting line
- 26.12: sub-connecting line
- 26.23a: merged terminal
- 26.4: connecting line
- 28: processing unit
- 28.1: input port
- 28.2: input port
- 28.3: input port
- 28.4: output port
- 26.11a: terminal
- 26.12a: terminal
- 220: sub-processing unit
- 222: sub-processing unit

## Claims

1. A video processing system, comprising:
- a processing device (20) having at least a first processing unit (22) and a second processing unit (24) that are interconnected via at least one configurable connecting unit (26),
- a control module (30) coupled to the processing device (20) to configure the connecting unit (26),
- an input module (50) connected to the control module (30) to process a user input,
- a graphical user interface (40) to visualize the processing units (22, 24) and the configuration of the connecting unit (26), **characterized in that**
- the connecting unit (26) is represented on the graphical user interface (40) by at least one connecting line (26.1, 26.2, 26.3) having a first terminal (26.1 a, 26.2a, 26.3a) connected to a port (22.1, 22.2, 22.3) of the first processing unit (22) and having a second terminal (26.1b, 26.2b, 26.3b) being arbitrarily connectable with a port (24.1, 24.2, 24.3) of the second processing unit (24).

2. The video processing system according to claim 1, wherein the connecting unit (26) is configurable by disconnecting at least a first or second terminal (26.1 a, 26.2a, 26.3a, 26.1 b, 26.2b, 26.3b) of a connecting line (26.1, 26.2, 26.3) from a port (22.1, 22.2, 22.3, 24.1, 24.2, 24.3) of the first or second processing units (22, 24) and by reconnecting the disconnected terminal (26.1 a, 26.2a, 26.3a, 26.1 b, 26.2b, 26.3b) to a different port (22.1, 22.2, 22.3, 24.1, 24.2, 24.3) of the first or second processing units (22, 24).

3. The video processing system according to any one of the preceding claims, wherein at least one of first and second terminals (26.1 a, 26.2a, 26.3a, 26.1 b, 26.2b, 26.3b) is disconnectable from a port (22.1, 22.2, 22.3, 24.1, 24.2, 24.3) of first or second processing units (22, 24) by selecting the terminal (26.1 a, 26.2a, 26.3a, 26.1 b, 26.2b, 26.3b) via the graphical user interface (40) and by displacing the selected terminal (26.1 a, 26.2a, 26.3a, 26.1 b, 26.2b, 26.3b) away from the respective port (22.1, 22.2, 22.3, 24.1, 24.2, 24.3).

4. The video processing system according to any one of the preceding claims, wherein at least one of first and second terminals (26.1 a, 26.2a, 26.3a, 26.1 b, 26.2b, 26.3b) is connectable with a port (22.1, 22.2, 22.3, 24.1, 24.2, 24.3) of first or second processing units (22, 24) by selecting the terminal (26.1 a, 26.2a, 26.3a, 26.1 b, 26.2b, 26.3b) via the graphical user interface (40) and by displacing the selected terminal (26.1 a, 26.2a, 26.3a, 26.1 b, 26.2b, 26.3b) towards the port (22.1, 22.2, 22.3, 24.1, 24.2, 24.3).

5. The video processing system according to any one of the preceding claims, wherein a connecting line (26.1, 26.2, 26.3) is creatable by selecting a port (22.1, 22.2, 22.3, 24.1, 24.2, 24.3) of the first or second processing units (22, 24) and by displacing the selected port (22.1, 22.2, 22.3, 24.1, 24.2, 24.3) towards a port (22.1, 22.2, 22.3, 24.1, 24.2, 24.3) of the second or first processing unit (24, 22).

6. The video processing system according to any one of the preceding claims, wherein the graphical user interface (40) is adapted to illustrate only those connecting lines (26.1, 26.2, 26.3) actually interconnecting at least two ports (22.1, 22.2, 22.3, 24.1, 24.2, 24.3) of first and second processing units (22, 24).

7. The video processing system according to any one of the preceding claims, wherein two or more connecting lines (26.2, 26.3) connected with one port (22.3) of first or second processing units (22, 24) are represented on the graphical user interface (40) as a merged terminal (26.23a).

8. The video processing system according to any one of the preceding claims, wherein the geometry and/or contour of the connecting line (26.1, 26.2, 26.3) is dynamically adaptable to the position of the first and/or the second terminals (26.1 a, 26.2a, 26.3a, 26.1 b, 26.2b, 26.3b) thereof.

9. A method of configuring a connecting unit (26) of a video processing system (10) according to any one of the preceding claims, comprising the steps of:
- selecting a terminal (26.1 a, 26.2a, 26.3a, 26.1 b, 26.2b, 26.3b) of a connecting line (26.1, 26.2, 26.3) via the graphical user interface (40),
- displacing the selected terminal (26.1 a, 26.2a, 26.3a, 26.1 b, 26.2b, 26.3b) towards a port (21.1, 22.2, 22.3, 24.1, 24.2, 24.3) of at least one of first and second processing units (22, 24).

10. The method according to claim 9, wherein a selected terminal (26.1 a, 26.2a, 26.3a, 26.1 b, 26.2b, 26.3b) is connected to a port (21.1, 22.2, 22.3, 24.1, 24.2, 24.3) by deselecting the terminal (26.1 a, 26.2a, 26.3a, 26.1 b, 26.2b, 26.3b) in direct vicinity to said port (21.1, 22.2, 22.3, 24.1, 24.2, 24.3).

11. The method according to claim 9 or 10, wherein the course or shape of a connecting line (26.1, 26.2, 26.3) is dynamically adapted to the displacement of at least one terminal (26.1a, 26.2a, 26.3a, 26.1 b, 26.2b, 26.3b) thereof on the graphical user interface (40).

12. The method according to any one of the preceding claims 9-11,
wherein a connecting line (26.1, 26.2, 26.3) is visually highlighted by the graphical user interface (40) in response to a selection of one of its terminals (26.1 a, 26.2a, 26.3a, 26.1 b, 26.2b, 26.3b).

13. The method according to any one of the preceding claims 9-12,
wherein the graphical user interface (40) provides a variety of selectable terminals (26.1 a, 26.2a, 26.3a, 26.1 b, 26.2b, 26.3b) in response to a selection of a merged terminal (26.23a) representing at least two terminals (26.2a, 26.3a) of different connecting lines (26.2, 26.3) connected with one port (22.3) of a processing unit (22).

14. A Computer program for configuring a connecting unit (26) of a video processing system (10) according to any one of the preceding claims 1-8, the computer program comprises:
- program means to select a terminal (26.1 a, 26.2a, 26.3a, 26.1 b, 26.2b, 26.3b) of a connecting line (26.1, 26.2, 26.3) via the graphical user interface (40),
- program means to displace the selected terminal (26.1 a, 26.2a, 26.3a, 26.1 b, 26.2b, 26.3b) towards a port (21.1, 22.2, 22.3, 24.1, 24.2, 24.3) of at least one of first and second processing units (22, 24).
